# EUROPEAN PATENT APPLICATION

(11) **EP 4 485 027 A1**
(43) Date of publication of application: **01.01.2025**
(21) Application number: 23206585.4
(22) Date of filing: 30.10.2023
(51) Int. Cl.: G02B 6/42

(54) **ARCHITECTURE AND METHOD FOR PASSIVE-ACTIVE OPTICAL ALIGNMENT OF PHOTONIC INTEGRATED CIRCUIT (PIC) AND FIBER ARRAY UNIT (FAU)**

(30) Priority: 29.06.2023 US 202318343793
(71) Applicant: INTEL Corporation, Santa Clara, CA 95054 (US)
(72) Inventor: Kim, Dowon, 678948 Singapore (SG); Ashok, Archana, Chandler, 85226 (US); Mei, Suohai, Sunnyvale, 94087 (US)
(74) Representative: Goddar, Heinz J.

(57) **Abstract**

Architecture and method for passive-active optical alignment of photonic integrated circuit (PIC) and an optical connector or fiber array unit (FAU). V-grooves are created on the surface of the PIC die and features are created on the FAU to extend from the FAU into the respective V-grooves. The passive alignment aspect includes using moderate precision pick and place equipment to place the FAU connector on the PIC die and mate the features into the V-grooves (i.e., assembling one or more sliding joints). The sliding joints limit movement between the components to a single degree of freedom. The active alignment aspect of the present disclosure includes manipulating the sliding joint, in the available degree of freedom, to actively search for the optimal optical power in optical coupling between the FAU and the PIC die.

## Description

### BACKGROUND

Aligning a fiber array unit (FAU) to a silicon photonic integrated circuit (PIC) presents a variety of technical challenges. In support of this, various passive and active optical alignment approaches have been developed to assure or optimize alignment efficiency. However, continued improvements to optical alignment approaches are desired.

### BRIEF DESCRIPTION OF THE DRAWINGS

FIGS. 1A, 1B, and 1C are simplified views of an exemplary photonic integrated circuit (PIC) die, in accordance with various embodiments.
FIGS. 2A - 2C are simplified illustrations of a fiber array unit (FAU) connector for optical coupling to the PIC die of FIGS. 1A-1C, in accordance with various embodiments.
FIGS. 3A, 3B, and 3C are simplified views of an apparatus comprising the FAU connector of FIGS. 2A-2C in optical alignment with the PIC die of FIGS. 1A-1C.
FIG 4 is a zoomed in illustration of the architecture for the passive-active alignment of the components.
FIG. 5A-5B illustrate various features of a V-groove.
FIG. 5C enables a discussion of the method for passive-active optical alignment of embodiments described herein.
FIGS 6A-6C illustrate a PIC die with vertical coupling in the array coupler interface, in accordance with various embodiments.
FIGS. 7A-7B illustrate a FAU connector configured for vertical coupling to the PIC die of FIGS 6A-6C, in accordance with various embodiments.
FIG. 8 and FIG. 9 illustrate embodiments of an apparatus in which the passive-active coupling further includes a beam collimation approach.
FIG. 10 is an exemplary method for making a system including a photonic integrated circuit (PIC) die optically aligned with a FAU connector, in accordance with various embodiments.
FIG. 11 is a simplified cross-sectional side view of a multi-chip package that includes a photonic integrated circuit (PIC) with an apparatus for optical alignment, in accordance with various embodiments.
FIG. 12 is a top view of a wafer and dies that may be included in a microelectronic assembly, in accordance with any of the embodiments disclosed herein.
FIG. 13 is a simplified cross-sectional side view showing an implementation of an integrated circuit on a die that may be included in various embodiments, in accordance with any of the embodiments disclosed herein.
FIG. 14 is a cross-sectional side view of a microelectronic assembly that may include any of the embodiments disclosed herein.
FIG. 15 is a block diagram of an example electrical device that may include any of the embodiments disclosed herein.

### DETAILED DESCRIPTION

The following detailed description is merely exemplary in nature and is not intended to limit the application and uses. It may be evident that the novel embodiments can be practiced without every detail described herein. For the sake of brevity, well known structures and devices may be shown in block diagram form to facilitate a description thereof.

In various optical modules and multi-die assemblies, a silicon photonic integrated circuit (PIC) may be required to optically connect to a fiber array unit (FAU). Ensuring a robust interface (i.e., optimized optical alignment) between the PIC and the FAU is technically challenging, at least in part due to the micron and sub-micron dimensions, and the different beam sizes and modes between an edge coupler of the PIC and the input to the fiber array in the FAU.

Some solutions to this technical problem are passive alignment schemes. One example of a passive alignment scheme utilizes a lithography process to create a precision V-groove feature to locate fibers therein; another implements an optical wire (vision based passive placement); still another implements an in-situ laser write optical waveguide etc. However, V-grooves designed for fiber alignment can sometimes be overkill for connecting a single-piece glass substrate to a silicon PIC, as the large contact area is susceptible to particulate contamination which can strongly impact yield. Additionally, in certain applications where the silicon PIC is flip chip bonded to a package substrate, a glass coupler component can introduce a significant protrusion beyond the silicon PIC surface. In these scenarios, the thickness of the glass coupler component can be limited by a glass substrate sized to accommodate the respective glass fiber diameter. This relationship can limit the strength of the glass substrate, making it vulnerable to cracking of the glass substrate and susceptible to misalignment due to substrate warpage (and hence affecting both glass coupler component yield and final product yield). It is challenging for passive alignment schemes to be competitive with active alignment schemes on coupling efficiency in the short term.

In contrast, active alignment schemes employ high-precision vision systems and highly accurate measurement tools. However, many active alignment schemes are slow and tedious and require powering up the silicon photonics integrated circuit (PIC). When more than one optical component is being actively aligned (such as a few waveguides aligned with an array of fibers in a fiber block, using a single-piece lens array), the lasers at the source may need to be switched on and off and/or a number of output channels must be analyzed at the same time to obtain the needed information for optimizing alignment. Active alignment can realize a reliable optimum optical coupling as compared to passive alignment, but it is time consuming, requires complicated handling and setup to power on the PIC sub-assembly, and is generally expensive or low as measured by units per hour (UPH). Accordingly, it is desirable to provide improved optical alignment architectures and methods.

The present disclosure provides a technical solution to the above-described problems related to optical alignment and provides an improvement over the limitations of available solutions, in the form of an architecture and method for passive-active optical alignment of photonic integrated circuit (PIC) and fiber array unit (FAU). Aspects of the present disclosure are characterized by a fiber array unit (FAU) connector and PIC die configured to optically couple together via a sliding joint. The sliding joint is visually distinguishable, as it is characterized by a V-groove in a surface of the PIC die and a feature (also referred to as a "V-protrusion") extending from the FAU connector into the V-groove and contacting two opposing sidewalls in the V-groove. The sliding joint comprises a component of the PIC die and a component of the FAU connector, and the sliding joint is sandwiched between the PIC die and the FAU connector, or at a seam between them.

The passive alignment aspect of the present disclosure includes using moderate precision pick and place equipment to place the FAU connector on the PIC die and mate the features into the V-grooves (i.e., assembling the sliding joint). The sliding joint limits movement between the components to a single degree of freedom. Aspects of the disclosure include two or more V-grooves with respective features; parallel orientation of the two or more V-grooves enables a sliding operation that engages two or more respective sliding joints. The active alignment aspect of the present disclosure includes manipulating the sliding joint(s) in the available degree of freedom to actively search for the optimal optical power. Upon completion of the active alignment process, the FAU connector can be affixed to the PIC die with a UV curable epoxy.

The provided passive-active optical alignment advantageously delivers the advantages of both passive alignment and active alignment; that is, improved coupling efficiency due to the active alignment, and reduced cycle time by using passive alignment to restrict the degrees of freedom needed for the active alignment process. Embodiments can significantly improve the accuracy, yield/cost, assembly throughput, reliability, and in-use strength of the optical connector, which is one of the most technically challenging aspects of optical module or multi-die assembly. The architecture, its implementation in a PIC die and associated FAU, and an exemplary method for making same is described in more detail in connection with the figures below.

Exemplary embodiments will hereinafter be described in conjunction with the following drawing figures, wherein like numerals denote like elements. Figures are not necessarily to scale but may be relied on for spatial orientation and relative positioning of features. As may be appreciated, certain terminology, such as "ceiling" and "floor", as well as "upper,", "uppermost", "lower," "above," "below," "bottom," and "top" refer to directions based on viewing the Figures to which reference is made. Further, terms such as "front," "back," "rear,", "side", "vertical", and "horizontal" may describe the orientation and/or location of portions of the component within a consistent but arbitrary frame of reference which is made clear by reference to the text and the associated Figures describing the component under discussion. Such terminology may include the words specifically mentioned above, derivatives thereof, and words of similar import.

As used herein, the term "adjacent" refers to layers or components that are in direct physical contact with each other, with no layers or components in between them. For example, a layer X that is adjacent to a layer Y refers to a layer that is in direct physical contact with layer Y. In contrast, as used herein, the phrase(s) "located on" (in the alternative, "located under," "located above/over," or "located next to," in the context of a first layer or component located on a second layer or component) includes (i) configurations in which the first layer or component is directly physically attached to the second layer (i.e., adjacent), and (ii) component and configurations in which the first layer or component is attached (e.g. coupled) to the second layer or component via one or more intervening layers or components.

The term "overlaid" (past participle of "overlay") may be used to refer to a layer to describe a location and orientation for the layer but does not imply a method for achieving the location and orientation. For example, a first layer overlaid on a second layer, or overlaid on a component means that the first layer is spread across or superimposed on the second layer or component. Alternately stated, a layer that is overlaid on a second layer may appear in a cross-sectional view as "adjacent" to the second layer, as described above.

As used herein, the term "electronic component" can refer to an active electronic circuit (e.g., processing unit, memory, storage device, FET) or a passive electronic circuit (e.g., resistor, inductor, capacitor).

As used herein, the term "integrated circuit component" can refer to an electronic component configured on a semiconducting material to perform a function. An integrated circuit (IC) component can comprise one or more of any computing system components described or referenced herein or any other computing system component, such as a processor unit (e.g., system-on-a-chip (SoC), processor core, graphics processor unit (GPU), accelerator, chipset processor), I/O controller, memory, or network interface controller, and can comprise one or more additional active or passive devices such as capacitors, decoupling capacitors, resistors, inductors, fuses, diodes, transformers, sensors, electrostatic discharge (ESD) devices, and memory devices.

A non-limiting example of an unpackaged integrated circuit component includes a single monolithic integrated circuit die (shortened herein to "die"); the die may include solder bumps attached to contacts on the die. When present on the die, the solder bumps or other conductive contacts can enable the die to be directly attached to a printed circuit board (PCB).

A non-limiting example of a packaged integrated circuit component comprises one or more integrated circuit dies mounted on a package substrate with the integrated circuit dies and package substrate encapsulated in a casing material, such as a metal, plastic, glass, or ceramic. Often the casing includes an integrated heat spreader (IHS); the packaged integrated circuit component often has bumps or leads attached to the package substrate for attaching the packaged integrated circuit component to a printed circuit board or motherboard.

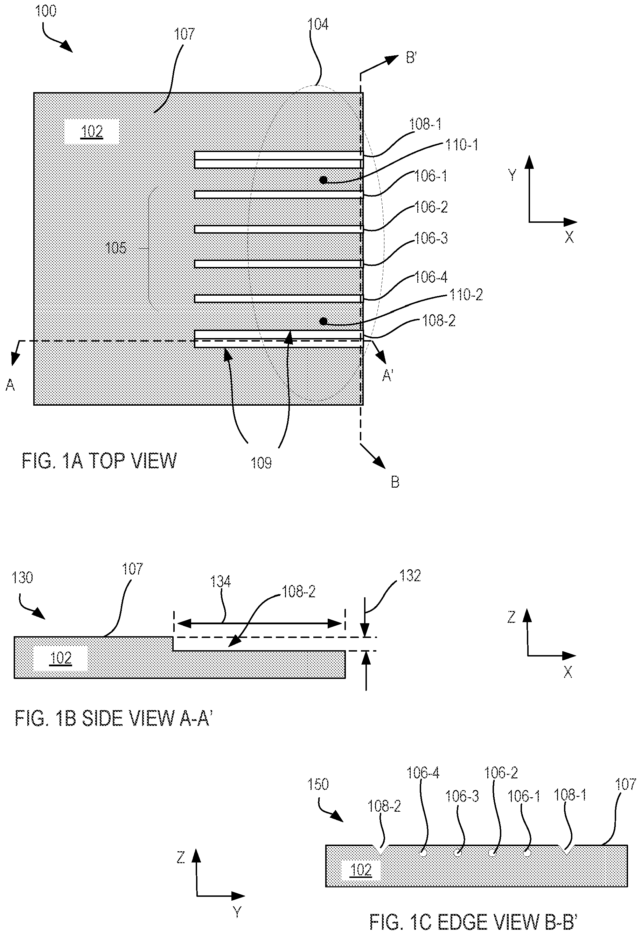

FIGS. 1A, 1B, and 1C are simplified views of an exemplary photonic integrated circuit (PIC) die, in accordance with various embodiments. A semiconductor substrate including a photonic integrated circuit (PIC) is indicated as PIC 102 die. As may be appreciated, the PIC 102 die includes a miniaturized circuit that integrates various electric and photonic components, such as lasers, modulators, detectors, and waveguides. The PIC 102 die includes one or more optical channels or waveguides. Waveguides in the silicon PIC 102 die are referred to herein as "main waveguides" to distinguish them from waveguides found in an external optical component, described below. Many PICs 102 have a plurality of main waveguides arranged in a waveguide array 105 (simplified in the illustration, showing only four main waveguides). Individual main waveguides may be routed differently around the silicon substrate and then collectively terminate at an array coupler interface located at a portion 104 of the PIC die 102. The array coupler interface is an architecture to optically couple to external optical components, as described in more detail below. The array coupler interface may be embodied as edge couplers or as vertical couplers. In the non-limiting example in FIG. 1, the array coupler interface is embodied as an edge coupler and may be referred to as edge coupler 106 or as array coupler interface 106. Additionally, the array coupler interface 106 can be embodied as a multiple channel edge array coupler, e.g., ch1: 106-1, ch2; 106-2, ch3: 106-3, and ch4: 106-4.

The PIC die 102 includes a surface 107 that defines two or more parallel V-grooves. As used herein, a V-groove is a V-shaped channel typically created by etching a surface of a thin layer of material such as silicon, silica, quartz, or other suitable material. Respective V-grooves comprise two opposing sidewalls 109. The sidewalls 109 are substantially two-dimensional planes. The first V-groove 108-1 is substantially parallel to the second V-groove 108-2. As indicated in views 100 and 130, the V-grooves may have depth 132 and length 134.

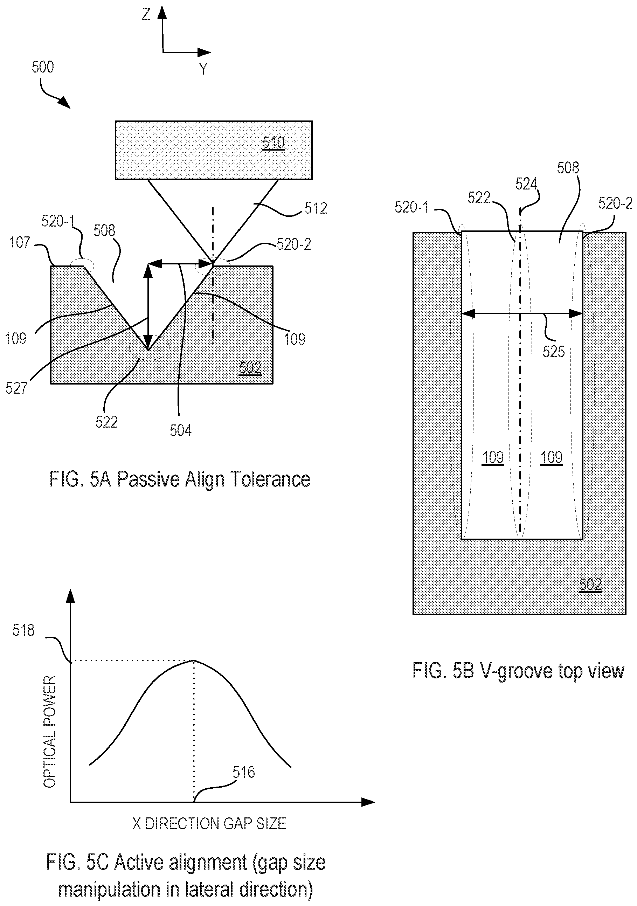

With additional reference to FIG. 5A and FIG. 5B, the sidewalls 109 have a respective shoulder or surface edge (520-1, 520-2) identified at the surface 107. The surface edges (520-1, 520-2) are substantially parallel at the surface 107, e.g., maintaining substantially the same width 525 throughout, and the sidewalls 109 slope downward therefrom into the material to meet at a longitudinal axis 524. The V-groove (108-1, 108-2, 508) has the depth 527, measured from the surface 107, that remains substantially equal along the length 134.

In various embodiments, the two planar sidewalls 109 have a mirror image angle (plus or minus about 5 degrees) measured from the surface 107 to the longitudinal axis 524 where they meet; the angle being less than about 90 degrees. In various embodiments, the angle of the slope of the sidewalls is 60 degrees plus or minus 10 degrees. In a scanning electron microscopic (SEM) image, the surface edges (520-1, 520-2) of a V-groove may be rounded, and the bottom 522 of the V-groove may be rounded.

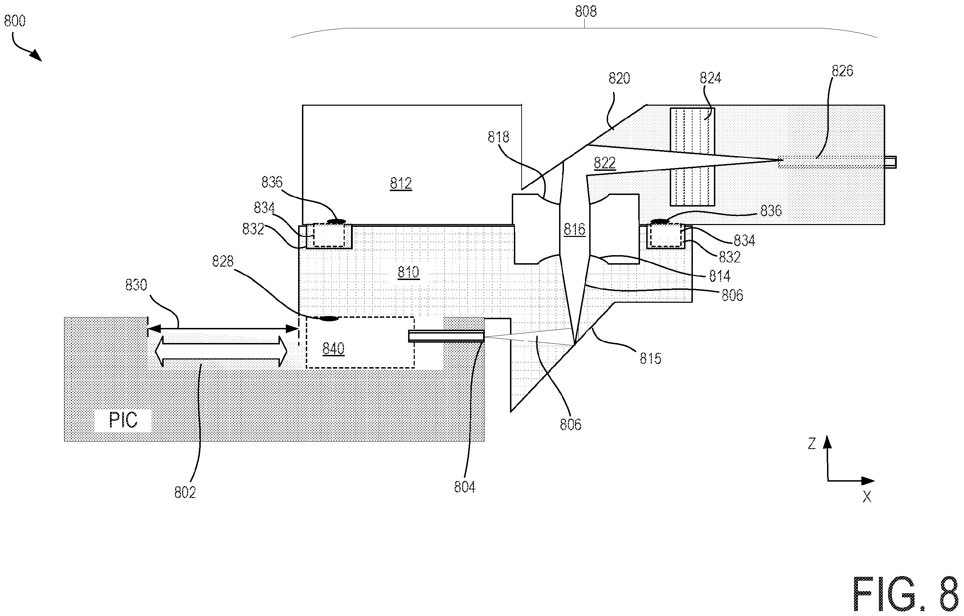

In the non-limiting example, a first V-groove 108-1 is located external to a first side of the array coupler interface 106, and a second V-groove 108-2 is located external to a second side of the array coupler interface, both V-grooves are open at the surface 107. The respective longitudinal axis 524 of the one or more V-grooves are substantially parallel to each other. In some embodiments, the V-grooves have a terminal that is open at an edge of the PIC die 102 (e.g., the edge indicated with the cutout B-B'), or have at least one missing sidewall, located at an edge of the PIC die (cutaway B-B'), also illustrated in FIGS. 1A-1C. However, in other embodiments, such as those illustrated in FIGS. 8-9, the V-grooves have all four sidewalls intact, and are not open on an edge.

In various aspects of the disclosure, the V-grooves 108-1 and 108-2 straddle the array coupler interface 106. Fiducial markers 110 may be implemented on the surface 107, generally in the portion 104, by a respective V-groove, to aid the operation of pick and place equipment. The figure indicates the fiducial marker 110-1 and the fiducial marker 110-2.

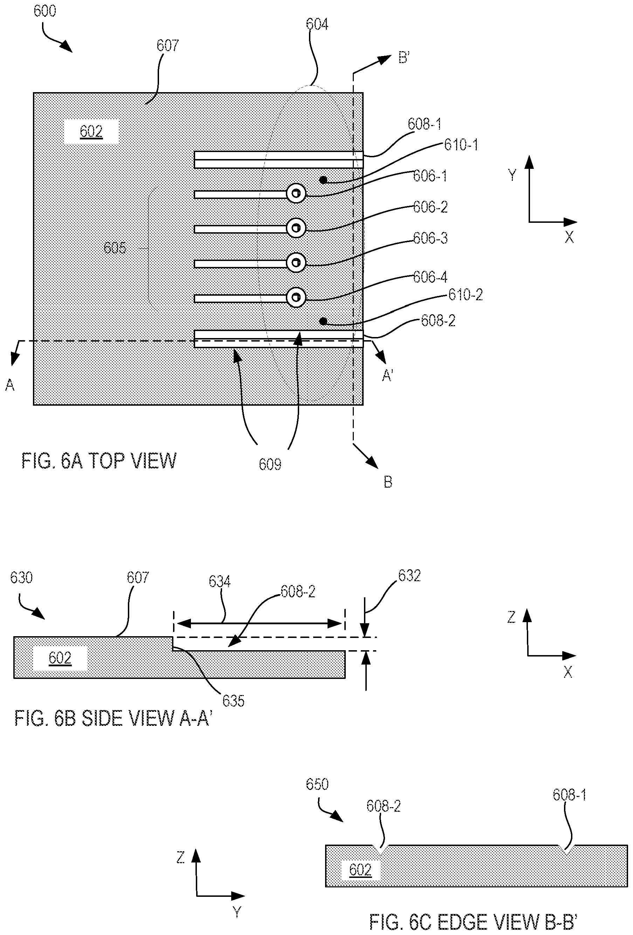

In various embodiments, the array coupler interface may be located on an edge of the PIC die 102 (edge coupling), as illustrated in view 150, or on a surface having the V-grooves, such as upper surface 107 of the PIC 102 die (e.g., vertical coupling, as illustrated in FIGS 6A-6C).

The PIC 102 die may have a silicon substrate layer or core of about 250-750 microns thick (wherein "about" means plus or minus 10%). The main waveguides of the waveguide array 105 may comprise silicon nitride. The main waveguides of the waveguide array 105 may be encased in a transparent dielectric material or cladding layer comprising oxygen and may include silicon dioxide. In practice, it may be difficult to distinguish the transparent dielectric material from the substrate layer in a cross-sectional scanning electron microscopy image (SEM), however, a non-limiting way to identify the described embodiments is to visually inspect both the materials present in a top down and/or cross-sectional view and the structure and shape of the materials to determine that the described embodiments have been implemented.

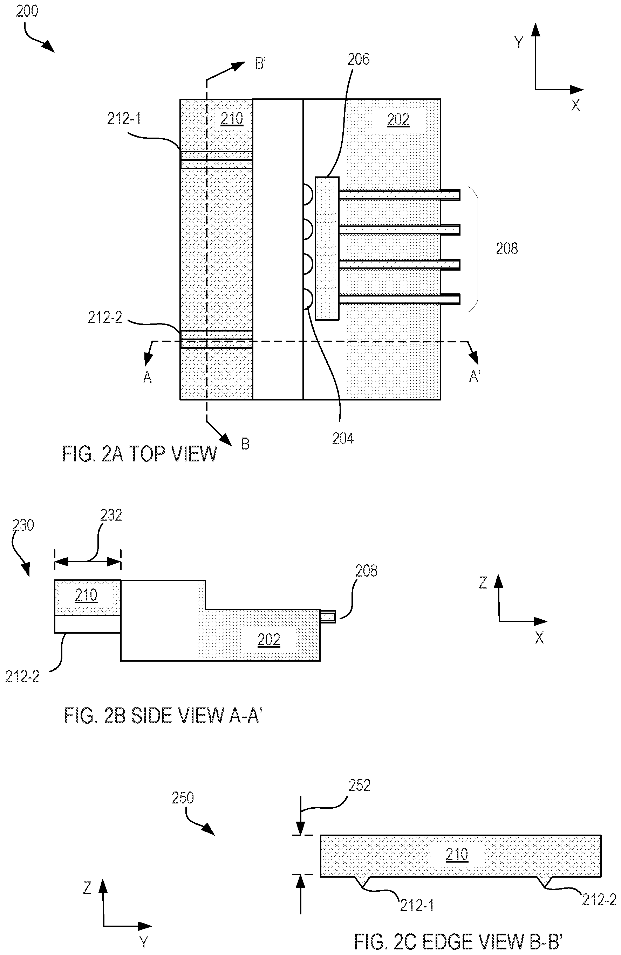

An exemplary embodiment of a fiber array unit (FAU) connector for optical coupling to the PIC die 102 is illustrated in FIGS. 2A, 2B, and 2C. In various embodiments, the FAU connector comprises a glass substrate with an embedded fiber optic array to optically couple to the array coupler interface of the PIC 102. In various aspects of the disclosure, the fiber optic array may comprise a plurality of waveguides 208, a plurality of optical fibers 208, or a combination thereof. Alternatively, the FAU may comprises at least one waveguide or optical fiber 208, As used herein, the "glass" of the glass substrate can be an alkali-free alkaline earth boro-aluminosicilate glass, such as a glass comprising aluminum, oxygen, boron, silicon, and an alkaline-earth metal (e.g., beryllium, magnesium, calcium, strontium, barium, radium, such as a glass comprising SiO₂, Al₂O₃, B₂O₃, and MgO), or a photosensitive glass (photomachineable or photostructurable glass). In some embodiments, a photosensitive glass can be a glass that belongs to the lithium-silicate family of glass (e.g., a glass comprising lithium, silicon, and oxygen) comprising metallic particles, such as gold, silver, or other suitable metallic particles.

As shown in top view 200, side view 230, and edge view 250 the exemplary FAU connector may include a body portion 202 and an overhang portion 210. In a non-limiting example, the body portion 202 is configured to be located by the edge of the PIC die 102 and the overhang portion 210 is configured to be located above the portion 104 of the surface 107. In various aspects of the disclosure, the body portion 202 may include one or more lenses 204 and an isolator 206.

The overhang portion 210 has length 232. In various embodiments, the length 232 is in a range of about 100 microns to about 5 millimeters. The overhang portion 210 has thickness 252. In various embodiments, the thickness 252 is greater than or equal to about 100 microns.

The features (first feature 212-1 and second feature 212-2) extend downward from a lower surface of the FAU connector in the illustration. The features may comprise glass. In various embodiments, the features 212-1 and 212-2 extend from the overhang portion 210. The features (212-1, and 212-2) are configured to mate with, or fit into, respective V-grooves (108-1 and 108-2) to become the sliding joint(s) when combined into a system or an apparatus with the PIC die 102. Accordingly, the features may have a cross-sectional profile that is V shaped (as illustrated).

The sliding joint is a means for passive-active alignment, in that it enables a passive pick and place alignment action and an active alignment action.

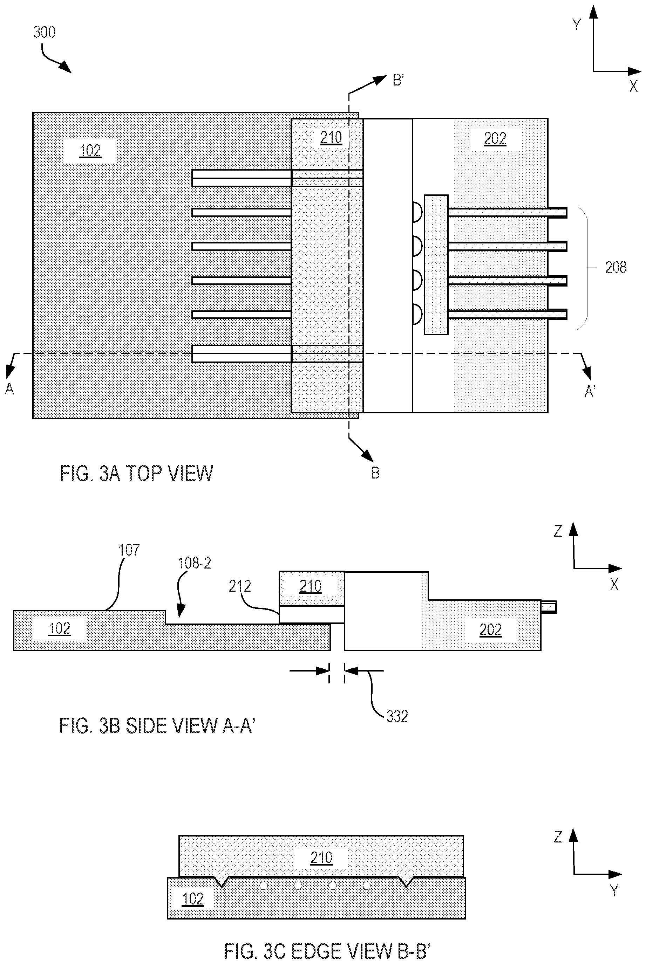

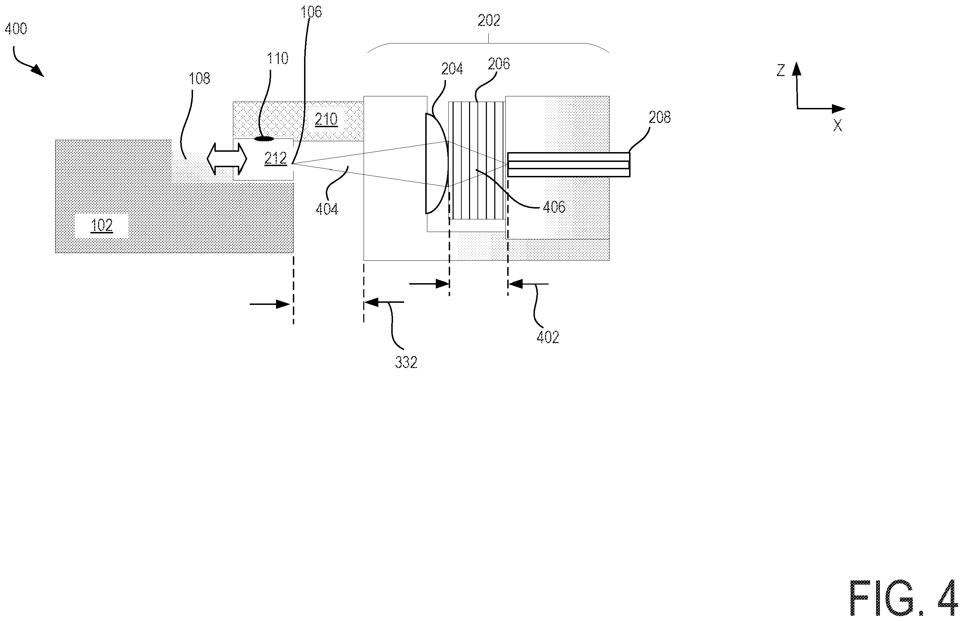

FIGS. 3A, 3B, and 3C illustrate an apparatus 300 comprising the FAU connector of FIGS. 2A-2C in optical alignment with the PIC die 102 of FIGS. 1A-1C, and FIG. 4 provides a zoomed in image for discussion. With reference back to FIGS. 1A-1C, it is intentionally illustrated in FIGS. 3A-3C and FIG. 4 that the overhang portion 210 does not necessarily extend across the entire portion 104 or consume the entire V-groove 108 length.

As shown in the simplified image of FIG. 5A, the passive optical alignment of embodiments includes assembling the components such that the feature 512 extends from the FAU connector 510 into a respective V-groove 508 in the PIC die 502. This process is also referred to as mating the feature into the V-groove. A passive align tolerance 504 is a measurement between the longitudinal axis of the V-groove and a longitudinal axis of the respective feature 512, as shown. This passive align tolerance 504 can be achieved using moderate precision pick and place equipment. By using the optical align fiducial markers for passive alignment, the FAU connector can be placed in an expected optimal position for optical coupling, i.e., a first order alignment process. Upon completion of the passive alignment process, the sliding joint is created, and the components are restrained to one degree of freedom of movement (the X direction in the figures).

To perform the active alignment process, the PIC is powered so that the array coupler interface components (e.g., edge couplers 106 or vertical couplers) are each a light source of an optical beam 404. The view 400 superimposes a feature 212 in a V-groove 108 over the source/ edge coupler 106 of the optical beam 404 and indicates a fiducial marker 110. In view 400, a double-sided cartoon arrow indicates the sliding joint functionality, and, shows how the feature 212, already extended into the V-groove 108 as described above, can be slid back and forth (in the one degree of freedom, or X direction in the figures) within the V-groove 108. Since the feature is an extension of the FAU connector, moving the feature means moving the FAU connector, which changes the width of a gap 332 (i.e., the adjustable gap 332 is observed with an adjustable gap width).

The gap is between the FAU connector and a portion of the PIC die, and the gap width affects the beam focal length through the lens in the FAU connector. Stated differently, by actively manipulating the sliding joint, and hence, gap width, the beam focal length through the lens can be manipulated, therefore, the received optical power at the embedded waveguide or optical fiber 208 is a function of the gap width. In FIG. 3B and FIG. 4, the gap 332 is measured between the edge of the PIC die 102 having the edge optical connectors and the body portion of the FAU connector, as shown. In a non-limiting example, the sliding joint enables adjusting the gap width in a range of about 0 microns to about 5 millimeters.

The optical beam 404 represents an optical beam output from a light source or edge coupler 106 of the array coupler interface of the PIC die 102. After leaving the edge coupler, the optical beam 404 begins to spread out in three dimensions (although rendered in two dimensions in the figure) as it enters the FAU connector and impinges on the lens 204, as shown. Lens 204 sharpens or focuses the beam, which is indicated with focusing beam 406. For optimal optical power, it is desirable to have convergence of the focusing beam 406 at the entrance of the core of the waveguide or optical fiber 208, as drawn. As used here, the core of the waveguide or optical fiber 208 is its longitudinal axis, and the entrance of the core can alternatively be viewed as the center of a circle representing the cross-sectional input to the optical fiber 208 or waveguide.

An exemplary graph of optical power versus the X direction alignment represented by the gap 332 is shown in FIG. 5C. As those with skill in the art will appreciate, there is a sweet spot, or optimal gap 332 size 516 to maximize the received optical power at the fiber 518; moving the lens 204 closer to the source of optical beam 404 (i.e., reducing the gap 332 size) increases the focal length 402, putting the convergence farther into the embedded waveguide or optical fiber 208, and moving the lens 204 farther from the source of light/edge coupler (i.e., enlarging the gap 332 size) can cause the convergence prior to the entrance point of the waveguide or optical fiber 208.

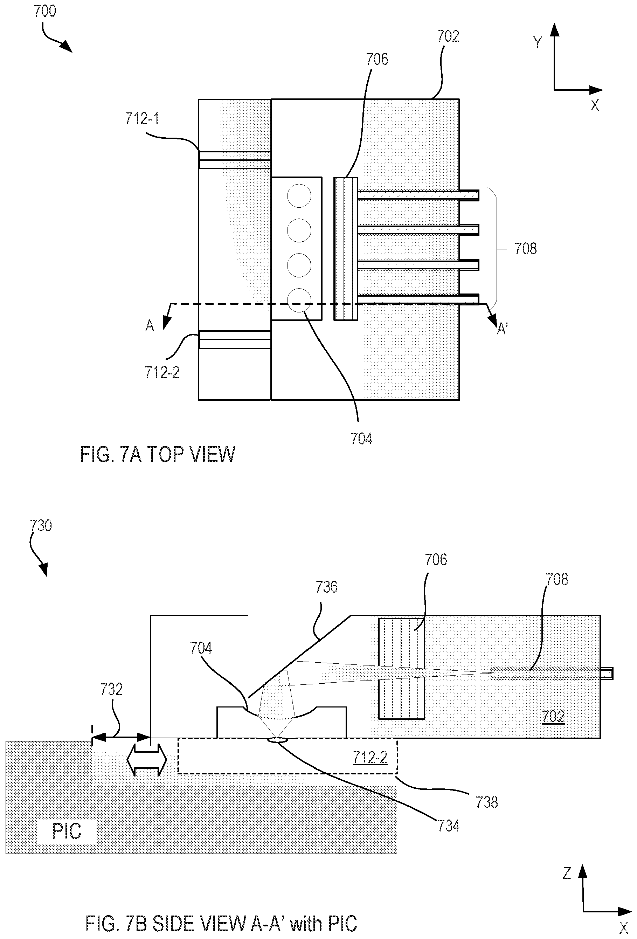

FIGS 6A-6C illustrate a PIC die 602 that employs vertical optical coupling, in accordance with various embodiments; FIGS. 7A-7B illustrate a FAU connector configured for passive-active alignment with vertical coupling to the PIC die of FIGS 6A-6C, in accordance with various embodiments. PIC die 602 has a plurality of main waveguides arranged in a waveguide array 605 and an array coupler interface embodied as a vertical coupler 606 (in this simplified example, vertical coupler 606 comprises 4 channels of vertical couplers 606-1, 606-2, 606-3, and 606-4). As before, individual main waveguides may be routed differently around the silicon substrate and then collectively terminate at the array coupler interface/vertical coupler 606 located in a portion 604 of the PIC die 602.

The surface 607 defines two or more parallel V-grooves, wherein respective V-grooves comprise two opposing sidewalls 609. In the simplified example, a first V-groove 608-1 is located external to a first side of the vertical coupler 606 (e.g., by vertical coupler 606-1), and a second V-groove 608-2 is located external to a second side of the vertical coupler 606 (e.g., by vertical coupler 606-4), both V-grooves are open at the surface 607 and have two long sidewalls that are substantially parallel to each other along a longitudinal axis, exhibiting the characteristic "V" shape shown in FIG. 1C. In some embodiments, the V-grooves have a terminal that is open at an edge of the PIC die 602 (e.g., the edge indicated with the cutout B-B'), as shown.

The first V-groove 608-1 is substantially parallel to the second V-groove 608-2; the parallel orientation of the two or more V-grooves enables a sliding operation that engages two or more sliding joints. As indicated in views 600 and 630, the V-grooves may have depth 632 and length 634. In various embodiments, the depth 632 may be substantially 62.5 microns. In various aspects of the disclosure, the V-grooves 608-1 and 608-2 straddle the array coupler interface and are limited in location and length to the portion 604 having the array coupler interface, as illustrated. Fiducial markers 610 may be implemented on the surface 607, generally in the portion 604, by a respective V-groove, to aid the operation of pick and place equipment. The figure indicates the fiducial marker 610-1 and the fiducial marker 610-2.

The exemplary FAU connector 702 in views 700 and 730 includes one or more lenses 704, an isolator 706, and a plurality of waveguides or optical fibers 708 embedded in a glass substrate. The FAU connector may further have an angled surface 736 for redirecting light, as shown. As before, the FAU connector optically couples to the vertical array coupler interface 606 (indicated with light source 734 representing a vertical coupler) via a sliding joint. The sliding joint comprises the V-groove 738 having the feature 712-2 extended therein. Light from the vertical coupler 734 spreads out as it travels vertically (upward on the page) to the lens 704, exiting the lens 704 impinges on and is reflected by the angled surface 736; the angled surface 736 redirects a focused beam of light through the isolator 706 to a point of convergence within the core (longitudinal axis) of the optical fiber 708. In various embodiments, the angled surface 736 is oriented to redirect the light by 90 degrees, as illustrated. As mentioned, for optimal optical power, it is desirable to have convergence of the focusing beam at the entrance of the core of the waveguide or optical fiber 708, as drawn.

The sliding joint can again be manipulated to change a gap width of gap between the FAU connector and a portion of the PIC die during an active alignment process, searching for the optimal focal position of the lens 704 to the beam, as shown. In this embodiment, the gap 732 is measured between the FAU connector and a short sidewall 635 or terminal end of the V-groove 738. Recall, previously two long sidewalls (109, 609) that are substantially parallel to each other were described, leaving potentially two short sidewalls that are substantially parallel to each other and substantially perpendicular to the long sidewalls; one of the short sidewalls may be omitted to be open to the edge (B-B'), the remaining short sidewall 635 is the reference here.

As described above, for optimal optical power received by the embedded optical fiber 708, it is desirable to have convergence of the focusing beam at the entrance of the core of the optical fiber 708, as drawn. Again, there is a sweet spot, or optimal gap 732 size to maximize optical power; in this scenario, changing the gap width changes lens 704 position and hence, where, on the lens 704, the light emitted from the vertical coupler 734 impinges, to be aligned to the core of the fiber.

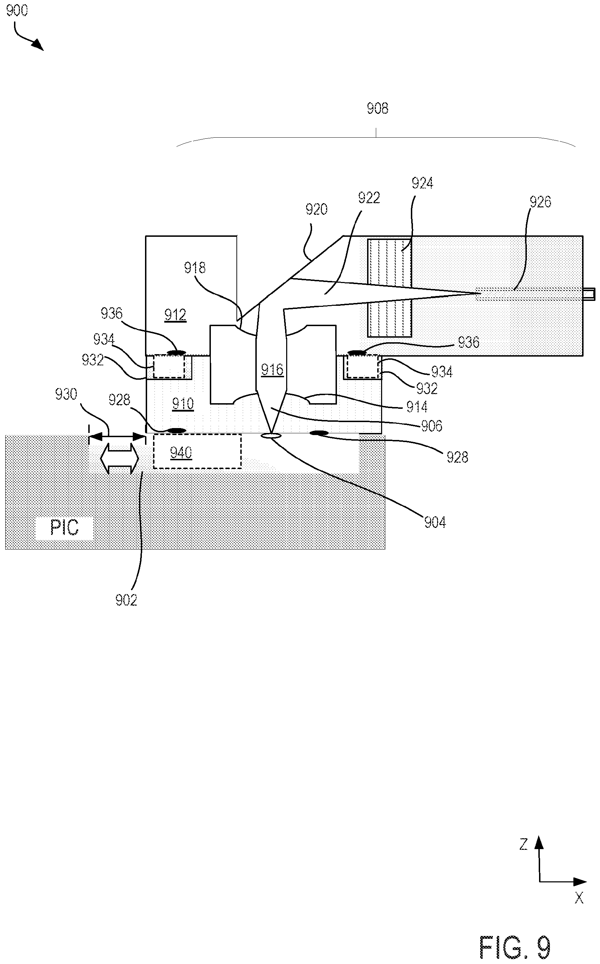

FIG. 8 and FIG. 9 illustrate an embodiment of an apparatus in which the FAU connector implements a beam collimation approach, and the FAU is optically coupled via beam collimation to the PIC die. As before, the FAU connector comprises glass and is to optically couple to the PIC die. In some embodiments, the beam collimation approach is implemented with a means for collimating light that is optically coupled to a means for focusing light. Further, the optical coupling to the PIC die may implement either vertical coupling or edge coupling, as described above. In FIG. 8, the optical coupling is lateral, or on an edge, with edge couplers, as described in connection with FIGS 3A-3C and FIG. 4; in FIG. 9, the optical coupling is vertical, on a (top) surface, with vertical couplers, as described in connection with FIGS. 6A-6C and FIG. 7. As with the above embodiments, the FAU connector 808, 908 is first passively aligned using the sliding joint methodology and architecture.

In embodiment 800, the PIC die has the V-grooves 802, edge coupler 804 (configured to emit light beam 806 when the PIC is active). One or more optical fiducial markers 828, applied to either the PIC surface, the lower surface of the FAU connector 808, or both, may be employed during the passive alignment process. The feature(s) 840 extends from the FAU connector 808 into respective V-grooves 802, thereby creating one or more sliding joints.

After the sliding joint is created, the double-sided cartoon arrow again indicates potential movement limited in the X direction, or the one degree of freedom. Changing the gap 830 size changes the overall beam path, lens locations, the beam focal length, and directly affects the optical power in the recipient optical fiber 826. The path taken by light emitted from the light source or edge coupler 804 to the optical fiber 826 is more complex than in previous embodiments. Emitted light first impinges on a first angled surface 815 and is reflected upward in the figure through a collimation lens 814 (first lens). Collimated light 816 passes through focusing lens 818 (second lens), then is reflected by a second angled surface 820, which directs the light 822 through the isolator 824 and into the core of the optical fiber 826 as previously described. In various embodiments, the angled surfaces may have a mirror coating.

In various collimation embodiments, the FAU connector 808, 908 may further be described as comprising a coupling component 810, 910 (alternatively, a means for coupling) and a focusing component 812, 912 (alternatively, a means for focusing). In some aspects of the disclosure, the focusing component is pluggable, for example, into a cavity in (a surface of) the coupling component 810. In various embodiments, the isolator 824, focusing lens 818 and second angled surface 820 are within the focusing component 812 and the collimation lens 814 and first angled surface 815 are in the coupling component 810.

Additionally, the focusing component 812 may be passive-active aligned to the coupling component 812 using sliding joints (e.g., the V-grooves 832, features 834, and optical fiducial markers 836, in accordance with the methodology described above). The coupling component 810 can also be passive-active aligned to the PIC die, also as described in the above embodiments.

In embodiment 900, the FAU connector 908 is configured for vertical optical coupling instead of edge coupling. The PIC die has the V-grooves 902 and a vertical coupler 904 (configured to emit light beam 906 when the PIC is active). One or more optical fiducial markers 928, applied to either the PIC surface, the lower surface of the FAU connector 908, or both, may be employed during the passive alignment process. The feature(s) 940 extends from the FAU connector 908 into respective V-grooves 902, thereby creating one or more sliding joints.

After the sliding joint is created, the double-sided cartoon arrow again indicates potential movement, limited in the X direction, or the one degree of freedom. Changing the gap 930 size changes the overall beam path, the beam focal length, the location of the first and second lens, and directly affects the optical power. The path taken by light emitted from the light source or vertical coupler 904 to the optical fiber 926 is again more complex than some previous embodiments. Emitted light 906 first impinges on a collimation lens 914 (first lens). Collimated light 916 passes to focusing lens 918 (second lens), focused light is reflected by an angled surface 920, which directs the light 922 through the isolator 924 and into the optical fiber 926 as previously described. In various embodiments, the angled surface may have a mirror coating.

The coupling component 910 again comprises the collimation lens 914. The focusing component 912 comprises the focusing lens 918, an angled surface 920, the isolator 924, and the optical fiber 926. In various aspects of this disclosure, the focusing component 912 may be passive-active aligned to the coupling component 910 using sliding joints (i.e., V-grooves 932, features 934, and optical fiducial markers 936, as described above. The coupling component 910 can also be passive-active aligned to the PIC die as described in the above embodiments.

In various proof of concept experiments, using the beam collimation approach (i.e., using a collimation lens - focusing lens pair, as shown in FIGS. 8-9), has advantageously increased the alignment tolerance of FAU connector. In some examples, for a 1dB loss and for a 3dB loss, the collimated beam approach increased alignment tolerance over a non-collimated optical alignment by four to five times.

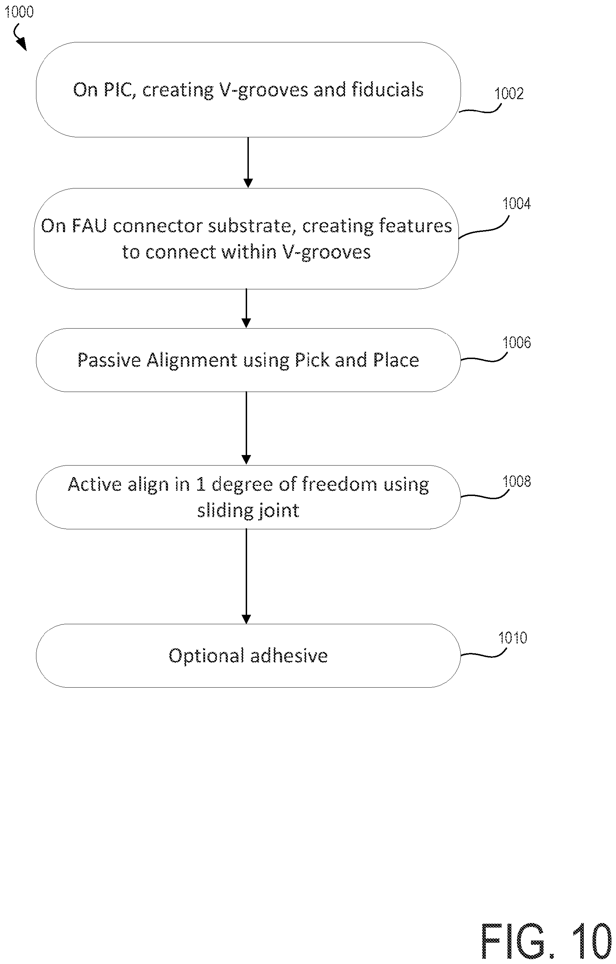

A method for passive-active optical alignment of photonic integrated circuit (PIC) and fiber array unit (FAU) connector is provided in FIG. 10. At 1002, one or more V-grooves are created on the surface of the PIC. The PIC die may be embodied in a silicon substrate, the PIC 102 die may have been fully manufactured before creating the V-grooves. The V-grooves can be created in a crystalline silicon substrate (having the PIC and main waveguides therein) at the predetermined locations using lithography and crystallographic etching techniques. In various embodiments, V-grooves are made using chemicals such as tetramethylammonium hydroxide (TMAH), potassium hydroxide (KOH), or EDP. This process allows the formation of accurate and precise crystallographic (111) planes or facets with about a 54.7-degree angle from a horizontal plane, thereby forming a V-groove. Also at 1002, the surface of the PIC die may be marked with one or more fiducial markers. The V-grooves and fiducial markers are located near the array coupler interface of the PIC die. The array coupler interface may be embodied as edge couplers or vertical couplers, as described above.

At 1004, one or more features are created on the glass substrate of the FAU connector using available 3D structuring techniques, such as multi-photon absorption and selective etching. Laser assisted selective wet etching may be employed. Any surface roughness in the feature after etching can be smoothed out using CO₂ (carbon dioxide) laser polishing. The features on the FAU connector are to mechanically connect to the sidewalls of the V-grooves in the top surface of the silicon of the silicon PIC 102 die. In various embodiments, the features also comprise glass. The features have a geometry capable of extending into the V-grooves of the PIC die and contacting at least two sidewalls therein. In some embodiments, the features have a V shaped profile that corresponds to the V shape of the V-grooves. At 1004, the lower surface of the FAU connector may be marked with one or more fiducial markers.

At 1006, the FAU connector is passively aligned to the PIC die using a pick and place process and equipment. The pick and place process may match fiducial markers on the FAU connector and PIC die. In this passive pick and place alignment, the optical fiducial markers on the top surface of PIC and a bottom surface of FAU connector assist passive pick and place alignment. By using these optical align fiducial markers for passive alignment, the FAU connector can be placed in the expected optimal position for optical coupling, i.e., a first order alignment process. The expected optimal position can be calculated as a function of the geometries of the individual optic parts, such as the edge coupler or vertical coupler, the respective lens length and curvature, the isolator and the fiber array.

At 1008, active alignment is performed to optimize the optical power of the apparatus, as a second order alignment process. As mentioned, the sliding joint removes five out of six potential degrees of freedom to be manipulated to optimize the optical power, the only remaining degree of freedom (X, in the figures) is addressed in the active alignment stage at 1008. When the five other degrees of freedom are aligned, the beam focal length and beam path can be changed by varying the gap width or the distance from the edge coupler to a lens.

At 1010, an adhesive may be used to secure the apparatus such that the passive-active alignment does not change. The adhesive layer may be index-matching epoxy.

The passive alignment aspect (pick and place) is generally understood to be about 8-10 times faster than active alignment processes. Some experiments have shown an improvement using the provided architectures and methods of up to 4-6 times shorter cycle times. Accordingly, the provided technical solutions improve units-per-hour (UPH) assembly without sacrificing optical coupling efficiency.

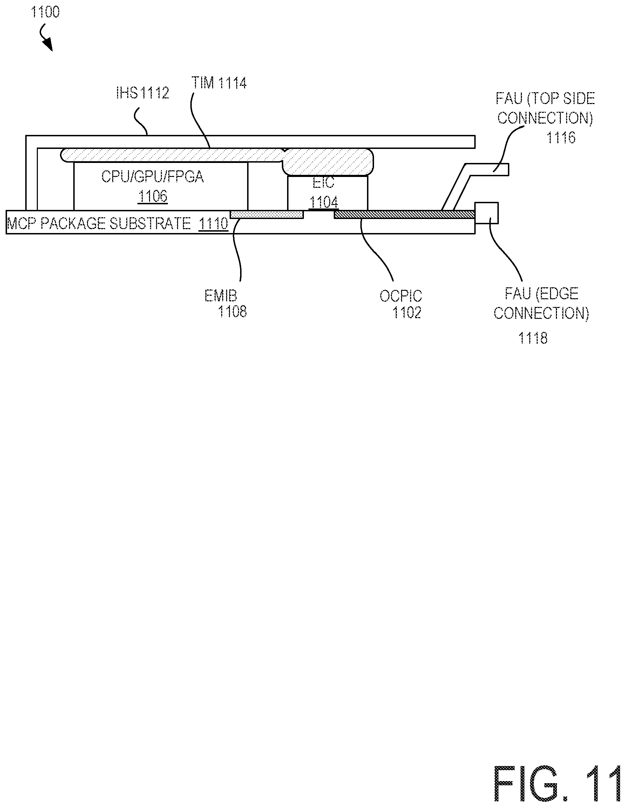

Turning now to FIG. 11, a PIC die having the provided architecture is implemented as an open cavity PIC (OCPIC) in a semiconductor package assembly application, as may be assembled by a system integrator. A multi-die semiconductor assembly can be referred to as a multi-chip package (MCP), MCP assembly, package assembly, or, alternatively, a multi-chip module (MCM). FIG. 11 is a simplified cross-sectional side view of an exemplary multi-chip package (MCP) 1100 that includes an OCPIC 1102, in accordance with various embodiments. The MCP 1100 may comprise one or more processor units, CPUs, graphics processors, or FPGAs, as represented by electronic integrated circuit (EIC) 1104, and integrated circuit 1106. In addition, the MCP 1100 can comprise additional components, such as embedded DRAM, stacked high bandwidth memory (HBM), shared cache memories, input/output (I/O) controllers, or memory controllers. Any of these additional components can be located on the same integrated circuit die as a processor unit, or on one or more integrated circuit dies separate from the integrated circuit dies comprising the processor units. These separate integrated circuit dies can be referred to as "chiplets."

In some embodiments, the OCPIC 1102 chiplet is embedded in a MCP package substrate 1110 (and the substrate of the OCPIC substrate is distinguished therefrom as PIC substrate, which may or may not be the same as the MCP package substate). In other embodiments, the OCPIC 1102 chiplet is attached to a MCP package substrate 1110. The OCPIC 1102 is adjacent to the EIC 1104 that is configured specifically to receive and process data from the OCPIC 1102. In practice, interconnections between the dies and/or chiplets of MCP 1100 can be provided by the MCP package substrate 1110, one or more silicon interposers, one or more silicon bridges 1108 embedded in the package substrate 1110 (such as Intel^{®} embedded multi-die interconnect bridges (EMIBs)), or combinations thereof. Silicon bridge 1108 is shown to operationally couple the integrated circuit 806 with the electronic integrated circuit 1104.

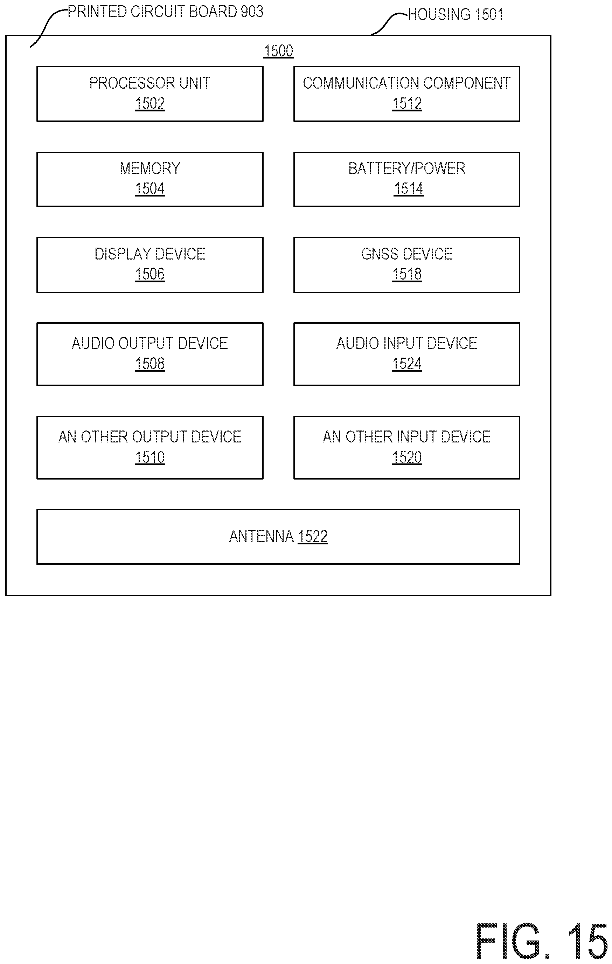

A thermal conduction layer interface material (TIM) 1114 may be located over the integrated circuit 1106 and the electronic integrated circuit 1104. The TIM 1114 can be any suitable material, such as a silver-particle filled thermal compound, thermal grease, phase change materials, indium foils or graphite sheets. An integrated heat spreader (IHS) 1112, located on the TIM 1114, covers the components of the MCP 1100. In practice, the MCP 800, and the OCPIC 1102 specifically, may communicate with other components in a device (e.g., device 1500, FIG. 15) via a fiber array unit (FAU) connector. In various embodiments, the FAU connector may be a top side connector 1116, such as a grating coupler, or an edge connector 1118, such as a microlens or V-groove.

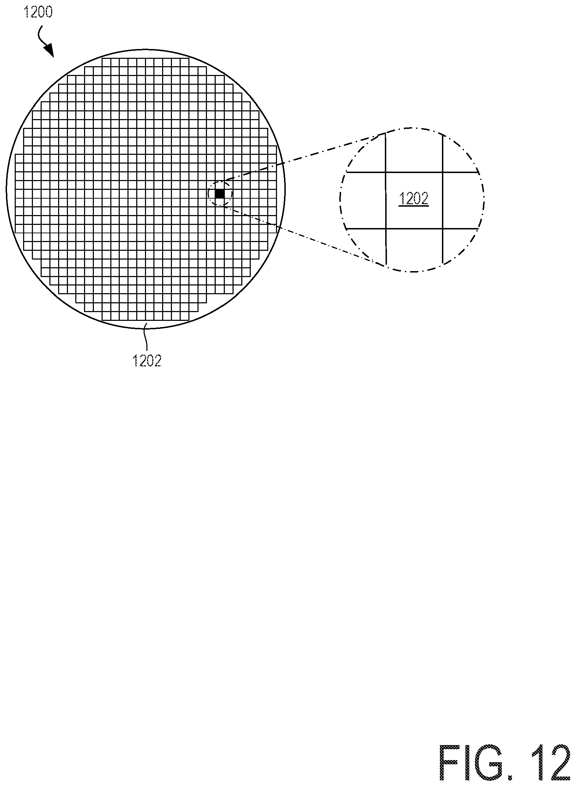

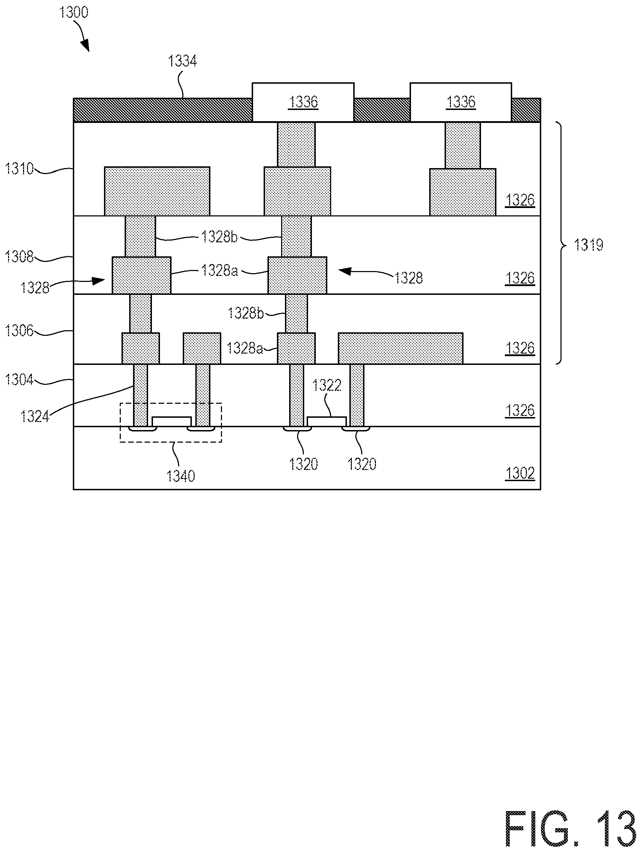

FIG. 12 is a top view of a wafer 1200 and dies 1202 that may be included in any of the embodiments disclosed herein. The wafer 1200 may be composed of semiconductor material and may include one or more dies 1202 formed on a surface of the wafer 1200. After the fabrication of the integrated circuit components on the wafer 1200 is complete, the wafer 1200 may undergo a singulation process in which the dies 1202 are separated from one another to provide discrete "chips" or destined for a packaged integrated circuit component. The individual dies 1202, comprising an integrated circuit component, may include one or more transistors (e.g., some of the transistors 1340 of FIG. 13, discussed below), supporting circuitry to route electrical signals to the transistors, passive components (e.g., signal traces, resistors, capacitors, or inductors), and/or any other integrated circuit components. In some embodiments, the wafer 1200 or the die 1202 may include a memory device (e.g., a random access memory (RAM) device, such as a static RAM (SRAM) device, a magnetic RAM (MRAM) device, a resistive RAM (RRAM) device, a conductive-bridging RAM (CBRAM) device, etc.), a logic device (e.g., an AND, OR, NAND, or NOR gate), or any other suitable circuit element. Additionally, multiple devices may be combined on a single die 1202. For example, a memory array formed by multiple memory devices may be formed on a same die 1202 as a processor unit (e.g., the processor unit 1502 of FIG. 15) or other logic that is configured to store information in the memory devices or execute instructions stored in the memory array. In some embodiments, a die 1202 may be attached to a wafer 1200 that includes other die, and the wafer 1200 is subsequently singulated, this manufacturing procedure is referred to as a die-to-wafer assembly technique.

FIG. 13 is a cross-sectional side view of an integrated circuit 1300 that may be included in any of the embodiments disclosed herein. One or more of the integrated circuits 1300 may be included in one or more dies 1202 (FIG. 12). The integrated circuit 1300 may be formed on a die substrate 1302 (e.g., the wafer 1200 of FIG. 12) and may be included in a die (e.g., the die 1202 of FIG. 12).

The die substrate 1302 may be a semiconductor substrate composed of semiconductor material systems including, for example, n-type or p-type materials systems (or a combination of both). The die substrate 1302 may include, for example, a crystalline substrate formed using a bulk silicon or a silicon-on-insulator (SOI) substructure. In some embodiments, the die substrate 1302 may be formed using alternative materials, which may or may not be combined with silicon, that include, but are not limited to, germanium, indium antimonide, lead telluride, indium arsenide, indium phosphide, gallium arsenide, or gallium antimonide. Further materials classified as group II-VI, III-V, or IV may also be used to form the die substrate 1302. Although a few examples of materials from which the die substrate 1302 may be formed are described here, any material that may serve as a foundation for an integrated circuit 1300 may be used. The die substrate 1302 may be part of a singulated die (e.g., the dies 1202 of FIG. 12) or a wafer (e.g., the wafer 1200 of FIG. 12).

The integrated circuit 1300 may include one or more device layers 1304 disposed on the die substrate 1302. The device layer 1304 may include features of one or more transistors 1340 (e.g., metal oxide semiconductor field-effect transistors (MOSFETs)) formed on the die substrate 1302. The transistors 1340 may include, for example, one or more source and/or drain (S/D) regions 1320, a gate 1322 to control current flow between the S/D regions 1320, and one or more S/D contacts 1324 to route electrical signals to/from the S/D regions 1320.

The gate 1322 may be formed of at least two layers, a gate dielectric and a gate electrode. The gate dielectric may include one layer or a stack of layers. The one or more layers may include silicon oxide, silicon dioxide, silicon carbide, and/or a high-k dielectric material. The high-k dielectric material may include elements such as hafnium, silicon, oxygen, titanium, tantalum, lanthanum, aluminum, zirconium, barium, strontium, yttrium, lead, scandium, niobium, and zinc. Examples of high-k materials that may be used in the gate dielectric include, but are not limited to, hafnium oxide, hafnium silicon oxide, lanthanum oxide, lanthanum aluminum oxide, zirconium oxide, zirconium silicon oxide, tantalum oxide, titanium oxide, barium strontium titanium oxide, barium titanium oxide, strontium titanium oxide, yttrium oxide, aluminum oxide, lead scandium tantalum oxide, and lead zinc niobate. In some embodiments, an annealing process may be conducted on the gate dielectric to improve its quality when a high-k material is used.

The gate electrode may be formed on the gate dielectric and may include at least one p-type work function metal or n-type work function metal, depending on whether the transistor 1340 is to be a p-type metal oxide semiconductor (PMOS) or an n-type metal oxide semiconductor (NMOS) transistor. In some implementations, the gate electrode may comprise a stack of two or more metal layers, where one or more metal layers are work function metal layers and at least one metal layer is a fill metal layer. Further metal layers may be included for other purposes, such as a barrier layer.

For a PMOS transistor, metals that may be used for the gate electrode include, but are not limited to, ruthenium, palladium, platinum, cobalt, nickel, conductive metal oxides (e.g., ruthenium oxide), and any of the metals discussed below with reference to an NMOS transistor (e.g., for work function tuning). For an NMOS transistor, metals that may be used for the gate electrode include, but are not limited to, hafnium, zirconium, titanium, tantalum, aluminum, alloys of these metals, carbides of these metals (e.g., hafnium carbide, zirconium carbide, titanium carbide, tantalum carbide, and aluminum carbide), and any of the metals discussed above with reference to a PMOS transistor (e.g., for work function tuning).

In some embodiments, when viewed as a cross-section of the transistor 1340 along the source-channel-drain direction, the gate electrode may comprise a U-shaped structure that includes a bottom portion substantially parallel to the surface of the die substrate 1302 and two sidewall portions that are substantially perpendicular to the top surface of the die substrate 1302. In other embodiments, at least one of the metal layers that form the gate electrode may simply be a planar layer that is substantially parallel to the top surface of the die substrate 1302 and does not include sidewall portions substantially perpendicular to the top surface of the die substrate 1302. In other embodiments, the gate electrode may comprise a combination of U-shaped structures and planar, non-U-shaped structures. For example, the gate electrode may comprise one or more U-shaped metal layers formed atop one or more planar, non-U-shaped layers.

In some embodiments, a pair of sidewall spacers may be formed on opposing sides of the gate stack to bracket the gate stack. The sidewall spacers may be formed from materials such as silicon nitride, silicon oxide, silicon carbide, silicon nitride doped with carbon, and silicon oxynitride. Processes for forming sidewall spacers are well known in the art and generally include deposition and etching process steps. In some embodiments, a plurality of spacer pairs may be used; for instance, two pairs, three pairs, or four pairs of sidewall spacers may be formed on opposing sides of the gate stack.

The S/D regions 1320 may be formed within the die substrate 1302 adjacent to the gate 1322 of individual transistors 1340. The S/D regions 1320 may be formed using an implantation/diffusion process or an etching/deposition process, for example. In the former process, dopants such as boron, aluminum, antimony, phosphorous, or arsenic may be ion-implanted into the die substrate 1302 to form the S/D regions 1320. An annealing process that activates the dopants and causes them to diffuse farther into the die substrate 1302 may follow the ion-implantation process. In the latter process, the die substrate 1302 may first be etched to form recesses at the locations of the S/D regions 1320. An epitaxial deposition process may then be conducted to fill the recesses with material that is used to fabricate the S/D regions 1320. In some implementations, the S/D regions 1320 may be fabricated using a silicon alloy such as silicon germanium or silicon carbide. In some embodiments, the epitaxially deposited silicon alloy may be doped in situ with dopants such as boron, arsenic, or phosphorous. In some embodiments, the S/D regions 1320 may be formed using one or more alternate semiconductor materials such as germanium or a group III-V material or alloy. In further embodiments, one or more layers of metal and/or metal alloys may be used to form the S/D regions 1320.

Electrical signals, such as power and/or input/output (I/O) signals, may be routed to and/or from the devices (e.g., transistors 1340) of the device layer 1304 through one or more interconnect layers disposed on the device layer 1304 (illustrated in FIG. 13 as interconnect layers 1306-1310). For example, electrically conductive features of the device layer 1304 (e.g., the gate 1322 and the S/D contacts 1324) may be electrically coupled with the interconnect structures 1328 of the interconnect layers 1306-1310. The one or more interconnect layers 1306-1310 may form a metallization stack (also referred to as an "ILD stack") 1319 of the integrated circuit 1300.

The interconnect structures 1328 may be arranged within the interconnect layers 1306-1310 to route electrical signals according to a wide variety of designs; in particular, the arrangement is not limited to the particular configuration of interconnect structures 1328 depicted in FIG. 13. Although a particular number of interconnect layers 1306-1310 is depicted in FIG. 13, embodiments of the present disclosure include integrated circuits having more or fewer interconnect layers than depicted.

In some embodiments, the interconnect structures 1328 may include lines 1328a and/or vias 1328b filled with an electrically conductive material such as a metal. The lines 1328a may be arranged to route electrical signals in a direction of a plane that is substantially parallel with a surface of the die substrate 1302 upon which the device layer 1304 is formed. For example, the lines 1328a may route electrical signals in a direction in and out of the page and/or in a direction across the page. The vias 1328b may be arranged to route electrical signals in a direction of a plane that is substantially perpendicular to the surface of the die substrate 1302 upon which the device layer 1304 is formed. In some embodiments, the vias 1328b may electrically couple lines 1328a of different interconnect layers 1306-1310 together.

The interconnect layers 1306-1310 may include a dielectric material 1326 disposed between the interconnect structures 1328, as shown in FIG. 13. In some embodiments, dielectric material 1326 disposed between the interconnect structures 1328 in different ones of the interconnect layers 1306-1310 may have different compositions; in other embodiments, the composition of the dielectric material 1326 between different interconnect layers 1306-1310 may be the same. The device layer 1304 may include a dielectric material 1326 disposed between the transistors 1340 and a bottom layer of the metallization stack as well. The dielectric material 1326 included in the device layer 1304 may have a different composition than the dielectric material 1326 included in the interconnect layers 1306-1310; in other embodiments, the composition of the dielectric material 1326 in the device layer 1304 may be the same as a dielectric material 1326 included in any one of the interconnect layers 1306-1310.

A first interconnect layer 1306 (referred to as Metal 1 or "M1") may be formed directly on the device layer 1304. In some embodiments, the first interconnect layer 1306 may include lines 1328a and/or vias 1328b, as shown. The lines 1328a of the first interconnect layer 1306 may be coupled with contacts (e.g., the S/D contacts 1324) of the device layer 1304. The vias 1328b of the first interconnect layer 1306 may be coupled with the lines 1328a of a second interconnect layer 1308.

The second interconnect layer 1308 (referred to as Metal 2 or "M2") may be formed directly on the first interconnect layer 1306. In some embodiments, the second interconnect layer 1308 may include via 1328b to couple the interconnect structures 1328 of the second interconnect layer 1308 with the lines 1328a of a third interconnect layer 1310. Although the lines 1328a and the vias 1328b are structurally delineated with a line within individual interconnect layers for the sake of clarity, the lines 1328a and the vias 1328b may be structurally and/or materially contiguous (e.g., simultaneously filled during a dual-damascene process) in some embodiments.

The third interconnect layer 1310 (referred to as Metal 3 or "M3") (and additional interconnect layers, as desired) may be formed in succession on the second interconnect layer 1308 according to similar techniques and configurations described in connection with the second interconnect layer 1308 or the first interconnect layer 1306. In some embodiments, the interconnect layers that are "higher up" in the metallization stack 1319 in the integrated circuit 1300 (i.e., farther away from the device layer 1304) may be thicker that the interconnect layers that are lower in the metallization stack 1319, with lines 1328a and vias 1328b in the higher interconnect layers being thicker than those in the lower interconnect layers.

The integrated circuit 1300 may include a solder resist material 1334 (e.g., polyimide or similar material) and one or more conductive contacts 1336 formed on the interconnect layers 1306-1310. In FIG. 13, the conductive contacts 1336 are illustrated as taking the form of bond pads. The conductive contacts 1336 may be electrically coupled with the interconnect structures 1328 and configured to route the electrical signals of the transistor(s) 1340 to external devices. For example, solder bonds may be formed on the one or more conductive contacts 1336 to mechanically and/or electrically couple an integrated circuit die including the integrated circuit 1300 with another component (e.g., a printed circuit board). The integrated circuit 1300 may include additional or alternate structures to route the electrical signals from the interconnect layers 1306-1310; for example, the conductive contacts 1336 may include other analogous features (e.g., posts) that route the electrical signals to external components.

In some embodiments in which the integrated circuit 1300 is a double-sided die, the integrated circuit 1300 may include another metallization stack (not shown) on the opposite side of the device layer(s) 1304. This metallization stack may include multiple interconnect layers as discussed above with reference to the interconnect layers 1306-1310, to provide conductive pathways (e.g., including conductive lines and vias) between the device layer(s) 1304 and additional conductive contacts (not shown) on the opposite side of the integrated circuit 1300 from the conductive contacts 1336.

In other embodiments in which the integrated circuit 1300 is a double-sided die, the integrated circuit 1300 may include one or more through silicon vias (TSVs) through the die substrate 1302; these TSVs may make contact with the device layer(s) 1304, and may provide conductive pathways between the device layer(s) 1304 and additional conductive contacts (not shown) on the opposite side of the integrated circuit 1300 from the conductive contacts 1336. In some embodiments, TSVs extending through the substrate can be used for routing power and ground signals from conductive contacts on the opposite side of the integrated circuit 1300 from the conductive contacts 1336 to the transistors 1340 and any other components integrated into the die having the integrated circuit 1300, and the metallization stack 1319 can be used to route I/O signals from the conductive contacts 1336 to transistors 1340 and any other components integrated into the die having the integrated circuit 1300.

Multiple integrated circuits 1300 may be stacked with one or more TSVs in the individual stacked devices providing connection between one of the devices to any of the other devices in the stack. For example, one or more high-bandwidth memory (HBM) integrated circuit dies can be stacked on top of a base integrated circuit die and TSVs in the HBM dies can provide connection between the individual HBM and the base integrated circuit die. Conductive contacts can provide additional connections between adjacent integrated circuit dies in the stack. In some embodiments, the conductive contacts can be fine-pitch solder bumps (microbumps).

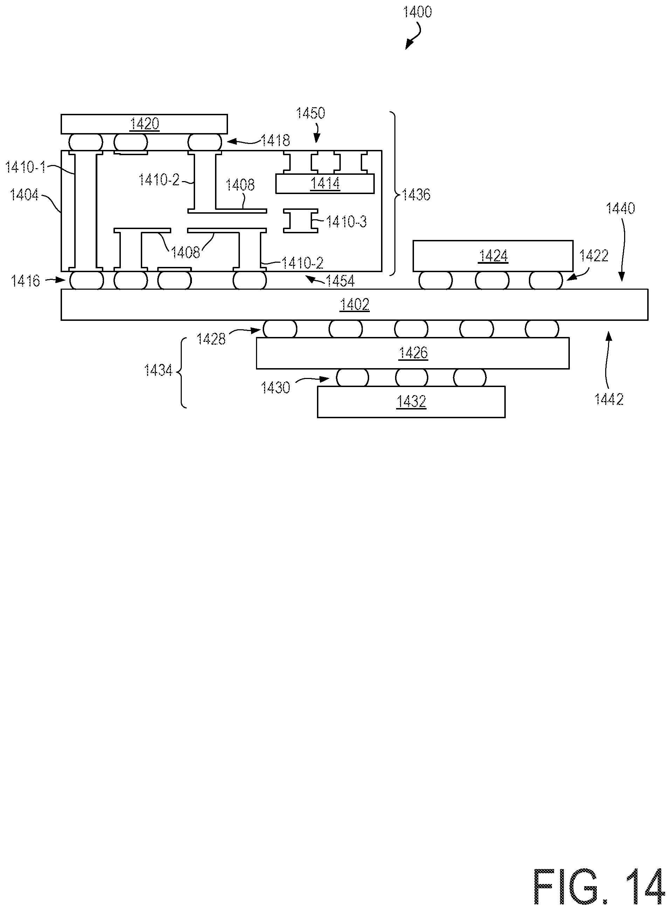

FIG. 14 is a cross-sectional side view of a microelectronic assembly 1400 that may include any of the embodiments disclosed herein. The microelectronic assembly 1400 includes multiple integrated circuit components disposed on a circuit board 1402 (which may be a motherboard, system board, mainboard, etc.). The microelectronic assembly 1400 may include components disposed on a first face 1440 of the circuit board 1402 and an opposing second face 1442 of the circuit board 1402; generally, components may be disposed on one or both faces 1440 and 1442.

In some embodiments, the circuit board 1402 may be a printed circuit board (PCB) including multiple metal (or interconnect) layers separated from one another by layers of dielectric material and interconnected by electrically conductive vias. The individual metal layers comprise conductive traces. Any one or more of the metal layers may be formed in a desired circuit pattern to route electrical signals (optionally in conjunction with other metal layers) between the components coupled to the circuit board 1402. In other embodiments, the circuit board 1402 may be a non-PCB substrate. The microelectronic assembly 1400 illustrated in FIG. 14 includes a package-on-interposer structure 1436 coupled to the first face 1440 of the circuit board 1402 by coupling components 1416. The coupling components 1416 may electrically and mechanically couple the package-on-interposer structure 1436 to the circuit board 1402, and may include solder balls (as shown in FIG. 14), pins (e.g., as part of a pin grid array (PGA), contacts (e.g., as part of a land grid array (LGA)), male and female portions of a socket, an adhesive, an underfill material, and/or any other suitable electrical and/or mechanical coupling structure.

The package-on-interposer structure 1436 may include an integrated circuit component 1420 coupled to an interposer 1404 by coupling components 1418. The coupling components 1418 may take any suitable form for the application, such as the forms discussed above with reference to the coupling components 1416. Although a single integrated circuit component 1420 is shown in FIG. 14, multiple integrated circuit components may be coupled to the interposer 1404; indeed, additional interposers may be coupled to the interposer 1404. The interposer 1404 may provide an intervening substrate used to bridge the circuit board 1402 and the integrated circuit component 1420.

The integrated circuit component 1420 may be a packaged or unpackaged integrated circuit component that includes one or more integrated circuit dies (e.g., the die 1202 of FIG. 12, the integrated circuit 1300 of FIG. 13) and/or one or more other suitable components.

The unpackaged integrated circuit component 1420 comprises solder bumps attached to contacts on the die. The solder bumps allow the die to be directly attached to the interposer 1404. In embodiments where the integrated circuit component 1420 comprises multiple integrated circuit dies; the dies can be of the same type (a homogeneous multi-die integrated circuit component) or of two or more different types (a heterogeneous multi-die integrated circuit component). In addition to comprising one or more processor units, the integrated circuit component 1420 can comprise additional components, such as embedded DRAM, stacked high bandwidth memory (HBM), shared cache memories, input/output (I/O) controllers, or memory controllers. Any of these additional components can be located on the same integrated circuit die as a processor unit, or on one or more integrated circuit dies separate from the integrated circuit dies comprising the processor units. These separate integrated circuit dies can be referred to as "chiplets." In embodiments where an integrated circuit component comprises multiple integrated circuit dies, interconnections between dies can be provided by the package substrate, one or more silicon interposers, one or more silicon bridges embedded in the package substrate (such as Intel^{®} embedded multi-die interconnect bridges (EMIBs)), or combinations thereof. A packaged multi-die integrated circuit component can be referred to as a multi-chip package (MCP) or multi-chip module (MCM).

Generally, the interposer 1404 may spread connections to a wider pitch or reroute a connection to a different connection. For example, the interposer 1404 may couple the integrated circuit component 1420 to a set of ball grid array (BGA) conductive contacts of the coupling components 1416 for coupling to the circuit board 1402. In the embodiment illustrated in FIG. 14, the integrated circuit component 1420 and the circuit board 1402 are attached to opposing sides of the interposer 1404; in other embodiments, the integrated circuit component 1420 and the circuit board 1402 may be attached to a same side of the interposer 1404. In some embodiments, three or more components may be interconnected by way of the interposer 1404.

In some embodiments, the interposer 1404 may be formed as a PCB, including multiple metal layers separated from one another by layers of dielectric material and interconnected by electrically conductive vias. In some embodiments, the interposer 1404 may be formed of an epoxy resin, a fiberglass-reinforced epoxy resin, an epoxy resin with inorganic fillers, a ceramic material, or a polymer material such as polyimide. In some embodiments, the interposer 1404 may be formed of alternate rigid or flexible materials that may include the same materials described above for use in a semiconductor substrate, such as silicon, germanium, and other group III-V and group IV materials. The interposer 1404 may include metal interconnects 1408 and vias 1410, including but not limited to through hole vias 1410-1 (that extend from a first face 1450 of the interposer 1404 to a second face 1454 of the interposer 1404), blind vias 1410-2 (that extend from the first or second faces 1450 or 1454 of the interposer 1404 to an internal metal layer), and buried vias 1410-3 (that connect internal metal layers).

In some embodiments, the interposer 1404 can comprise a silicon interposer. Through silicon vias (TSV) extending through the silicon interposer can connect connections on the first face of a silicon interposer to an opposing second face of the silicon interposer. In some embodiments, an interposer 1404 comprising a silicon interposer can further comprise one or more routing layers to route connections on a first face of the interposer 1404 to an opposing second face of the interposer 1404.

The interposer 1404 may further include embedded devices 1414, including both passive and active devices. Such devices may include, but are not limited to, capacitors, decoupling capacitors, resistors, inductors, fuses, diodes, transformers, sensors, electrostatic discharge (ESD) devices, and memory devices. More complex devices such as radio frequency devices, power amplifiers, power management devices, antennas, arrays, sensors, and microelectromechanical systems (MEMS) devices may also be formed on the interposer 1404. The package-on-interposer structure 1436 may take the form of any of the package-on-interposer structures known in the art. In embodiments where the interposer is a non-printed circuit board
The integrated circuit assembly 1400 may include an integrated circuit component 1424 coupled to the first face 1440 of the circuit board 1402 by coupling components 1422. The coupling components 1422 may take the form of any of the embodiments discussed above with reference to the coupling components 1416, and the integrated circuit component 1424 may take the form of any of the embodiments discussed above with reference to the integrated circuit component 1420.

The integrated circuit assembly 1400 illustrated in FIG. 14 includes a package-on-package structure 1434 coupled to the second face 1442 of the circuit board 1402 by coupling components 1428. The package-on-package structure 1434 may include an integrated circuit component 1426 and an integrated circuit component 1432 coupled together by coupling components 1430 such that the integrated circuit component 1426 is disposed between the circuit board 1402 and the integrated circuit component 1432. The coupling components 1428 and 1430 may take the form of any of the embodiments of the coupling components 1416 discussed above, and the integrated circuit components 1426 and 1432 may take the form of any of the embodiments of the integrated circuit component 1420 discussed above. The package-on-package structure 1434 may be configured in accordance with any of the package-on-package structures known in the art.

FIG. 15 is a block diagram of an example electrical device 1500 that may include one or more of the embodiments disclosed herein. For example, any suitable ones of the components of the electrical device 1500 may include one or more of the package assemblies (e.g., multi-chip package (MCP) 1100), microelectronic assemblies 1400, integrated circuit components 1420, integrated circuits 1300, integrated circuit dies 1202, or structures disclosed herein. A number of components are illustrated in FIG. 15 as included in the electrical device 1500, but any one or more of these components may be omitted or duplicated, as suitable for the application. In some embodiments, some or all the components included in the electrical device 1500 may be attached to one or more motherboards, mainboards, printed circuit boards 1503, or system boards. In some embodiments, one or more of these components are fabricated onto a single system-on-a-chip (SoC) die. In various embodiments, the electrical device 900 is enclosed by, or integrated with, a housing 1501.

Additionally, in various embodiments, the electrical device 1500 may not include one or more of the components illustrated in FIG. 15, but the electrical device 1500 may include interface circuitry for coupling to the one or more components. For example, the electrical device 1500 may not include a display device 1506, but may include display device interface circuitry (e.g., a connector and driver circuitry) to which a display device 1506 may be coupled. In another set of examples, the electrical device 1500 may not include an audio input device 1524 or an audio output device 1508, but may include audio input or output device interface circuitry (e.g., connectors and supporting circuitry) to which an audio input device 1524 or audio output device 1508 may be coupled.

The electrical device 1500 may include one or more processor units 1502 (e.g., one or more processor units). As used herein, the terms "processor unit", "processing unit" or "processor" may refer to any device or portion of a device that processes electronic data from registers and/or memory to transform that electronic data into other electronic data that may be stored in registers and/or memory. The processor unit 1502 may include one or more digital signal processors (DSPs), application-specific integrated circuits (ASICs), central processing units (CPUs), graphics processing units (GPUs), general-purpose GPUs (GPGPUs), accelerated processing units (APUs), field-programmable gate arrays (FPGAs), neural network processing units (NPUs), data processor units (DPUs), accelerators (e.g., graphics accelerator, compression accelerator, artificial intelligence accelerator), controller crypto processors (specialized processors that execute cryptographic algorithms within hardware), server processors, controllers, or any other suitable type of processor units. As such, the processor unit can be referred to as an XPU (or xPU).

The electrical device 1500 may include a memory 1504, which may itself include one or more memory devices such as volatile memory (e.g., dynamic random access memory (DRAM), static random-access memory (SRAM)), non-volatile memory (e.g., read-only memory (ROM), flash memory, chalcogenide-based phase-change non-voltage memories), solid state memory, and/or a hard drive. In some embodiments, the memory 1504 may include memory that is located on the same integrated circuit die as the processor unit 1502. This memory may be used as cache memory (e.g., Level 1 (L1), Level 2 (L2), Level 3 (L3), Level 4 (L4), Last Level Cache (LLC)) and may include embedded dynamic random-access memory (eDRAM) or spin transfer torque magnetic random-access memory (STT-MRAM).

In some embodiments, the electrical device 1500 can comprise one or more processor units 1502 that are heterogeneous or asymmetric to another processor unit 1502 in the electrical device 1500. There can be a variety of differences between the processing units 1502 in a system in terms of a spectrum of metrics of merit including architectural, microarchitectural, thermal, power consumption characteristics, and the like. These differences can effectively manifest themselves as asymmetry and heterogeneity among the processor units 1502 in the electrical device 1500.

In some embodiments, the electrical device 1500 may include a communication component 1512 (e.g., one or more communication components). For example, the communication component 1512 can manage wireless communications for the transfer of data to and from the electrical device 1500. The term "wireless" and its derivatives may be used to describe circuits, devices, systems, methods, techniques, communications channels, etc., that may communicate data using modulated electromagnetic radiation through a nonsolid medium. The term "wireless" does not imply that the associated devices do not contain any wires, although in some embodiments they might not.

The communication component 1512 may implement any of a number of wireless standards or protocols, including but not limited to Institute for Electrical and Electronic Engineers (IEEE) standards including Wi-Fi (IEEE 802.11 family), IEEE 802.16 standards (e.g., IEEE 802.16-2005 Amendment), Long-Term Evolution (LTE) project along with any amendments, updates, and/or revisions (e.g., advanced LTE project, ultra-mobile broadband (UMB) project (also referred to as "3GPP2"), etc.). IEEE 802.16 compatible Broadband Wireless Access (BWA) networks are generally referred to as WiMAX networks, an acronym that stands for Worldwide Interoperability for Microwave Access, which is a certification mark for products that pass conformity and interoperability tests for the IEEE 802.16 standards. The communication component 1512 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication component 1512 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication component 1512 may operate in accordance with Code Division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication component 1512 may operate in accordance with other wireless protocols in other embodiments. The electrical device 1500 may include an antenna 1522 to facilitate wireless communications and/or to receive other wireless communications (such as AM or FM radio transmissions).

In some embodiments, the communication component 1512 may manage wired communications, such as electrical, optical, or any other suitable communication protocols (e.g., IEEE 802.3 Ethernet standards). As noted above, the communication component 1512 may include multiple communication components. For instance, a first communication component 1512 may be dedicated to shorter-range wireless communications such as Wi-Fi or Bluetooth, and a second communication component 1512 may be dedicated to longer-range wireless communications such as global positioning system (GPS), EDGE, GPRS, CDMA, WiMAX, LTE, EV-DO, or others. In some embodiments, a first communication component 1512 may be dedicated to wireless communications, and a second communication component 1512 may be dedicated to wired communications.

The electrical device 1500 may include battery/power circuitry 1514. The battery/power circuitry 1514 may include one or more energy storage devices (e.g., batteries or capacitors) and/or circuitry for coupling components of the electrical device 1500 to an energy source separate from the electrical device 1500 (e.g., AC line power).

The electrical device 1500 may include a display device 1506 (or corresponding interface circuitry, as discussed above). The display device 1506 may include one or more embedded or wired or wirelessly connected external visual indicators, such as a heads-up display, a computer monitor, a projector, a touchscreen display, a liquid crystal display (LCD), a light-emitting diode display, or a flat panel display.

The electrical device 1500 may include an audio output device 1508 (or corresponding interface circuitry, as discussed above). The audio output device 1508 may include any embedded or wired or wirelessly connected external device that generates an audible indicator, such speakers, headsets, or earbuds.

The electrical device 1500 may include an audio input device 1524 (or corresponding interface circuitry, as discussed above). The audio input device 1524 may include any embedded or wired or wirelessly connected device that generates a signal representative of a sound, such as microphones, microphone arrays, or digital instruments (e.g., instruments having a musical instrument digital interface (MIDI) output). The electrical device 1500 may include a Global Navigation Satellite System (GNSS) device 1518 (or corresponding interface circuitry, as discussed above), such as a Global Positioning System (GPS) device. The GNSS device 1518 may be in communication with a satellite-based system and may determine a geolocation of the electrical device 1500 based on information received from one or more GNSS satellites, as known in the art.

The electrical device 1500 may include another output device 1510 (or corresponding interface circuitry, as discussed above). Examples of the other output device 1510 may include an audio codec, a video codec, a printer, a wired or wireless transmitter for providing information to other devices, or an additional storage device.

The electrical device 1500 may include another input device 1520 (or corresponding interface circuitry, as discussed above). Examples of the other input device 1520 may include an accelerometer, a gyroscope, a compass, an image capture device (e.g., monoscopic or stereoscopic camera), a trackball, a trackpad, a touchpad, a keyboard, a cursor control device such as a mouse, a stylus, a touchscreen, proximity sensor, microphone, a bar code reader, a Quick Response (QR) code reader, electrocardiogram (ECG) sensor, PPG (photoplethysmogram) sensor, galvanic skin response sensor, any other sensor, or a radio frequency identification (RFID) reader.

The electrical device 1500 may have any desired form factor, such as a hand-held or mobile electrical device (e.g., a cell phone, a smart phone, a mobile internet device, a music player, a tablet computer, a laptop computer, a 2-in-1 convertible computer, a portable all-in-one computer, a netbook computer, an ultrabook computer, a personal digital assistant (PDA), an ultra-mobile personal computer, a portable gaming console, etc.), a desktop electrical device, a server, a rack-level computing solution (e.g., blade, tray or sled computing systems), a workstation or other networked computing component, a printer, a scanner, a monitor, a set-top box, an entertainment control unit, a stationary gaming console, smart television, a vehicle control unit, a digital camera, a digital video recorder, a wearable electrical device or an embedded computing system (e.g., computing systems that are part of a vehicle, smart home appliance, consumer electronics product or equipment, manufacturing equipment). In some embodiments, the electrical device 1500 may be any other electronic device that processes data. In some embodiments, the electrical device 1500 may comprise multiple discrete physical components. Given the range of devices that the electrical device 1500 can be manifested as in various embodiments, in some embodiments, the electrical device 1500 can be referred to as a computing device or a computing system.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing the exemplary embodiment or exemplary embodiments. Various changes can be made in the function and arrangement of elements without departing from the scope of the disclosure as set forth in the appended claims and the legal equivalents thereof.

As used herein, phrases such as "an embodiment," "various embodiments," "some embodiments," and the like, indicate that some embodiments may have some, all, or none of the features described for other embodiments. "First," "second," "third," and the like describe a common object and indicate different instances of like objects being referred to; unless specifically stated, they do not imply a given sequence, either temporally or spatially, in ranking, or any other manner. In accordance with patent application parlance, "connected" indicates elements that are in direct physical or electrical contact with each other and "coupled" indicates elements that cooperate or interact with each other, coupled elements may or may not be in direct physical or electrical contact. Furthermore, the terms "comprising," "including," "having," and the like, are utilized synonymously to denote non-exclusive inclusions.

As used in this application and the claims, a list of items joined by the term "at least one of" or the term "one or more of" can mean any combination of the listed terms. For example, the phrase "at least one of A, B or C" can mean A; B; C; A and B; A and C; B and C; or A, B, and C. Likewise, the phrase "one or more of A, B and C" can mean A; B; C; A and B; A and C; B and C; or A, B, and C.

As used in this application and the claims, the phrase "individual of" or "respective of" following by a list of items recited or stated as having a trait, feature, etc., means that all the items in the list possess the stated or recited trait, feature, etc. For example, the phrase "individual of A, B, or C, comprise a sidewall" or "respective of A, B, or C, comprise a sidewall" means that A comprises a sidewall, B comprises sidewall, and C comprises a sidewall.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

### Examples

Example 1 is an apparatus, comprising: a photonic integrated circuit (PIC) die with an array coupler interface, wherein a surface of the PIC die defines two or more V -grooves, wherein the V-grooves comprise two opposing sidewalls; and a fiber array unit (FAU) connector optically coupled to the array coupler interface via a sliding joint; and wherein the sliding joint includes a feature extending from the FAU into a V-groove and contacting the two opposing sidewalls.

Example 2 includes the subject matter of Example 1, wherein the FAU connector further includes a lens, an isolator, and at least one optical fiber.

Example 3 includes the subject matter of Example 2, wherein the sliding joint includes a gap between the FAU connector and a portion of the PIC die, and an optical power in the at least one optical fiber is a function of a gap width.

Example 4 includes the subject matter of Example 3, wherein the gap width has a range of about 0 microns to about 5 millimeters.

Example 5 includes the subject matter of Example 1, further comprising at least one fiducial marker located on the surface.

Example 6 includes the subject matter of Example 1 wherein the FAU connector comprises an overhang portion that overlays on a portion of the PIC die.

Example 7 includes the subject matter of Example 6, wherein the overhang portion has a length in a range of about 100 microns to about 5 millimeters.

Example 8 includes the subject matter of Example 6, wherein the overhang portion has a thickness of greater than or equal to about 100 microns.

Example 9 includes the subject matter of Example 1, wherein the V-grooves have a depth of about 62.5 microns.

Example 10 includes the subject matter of Example 1, further comprising an ultra-violet curable epoxy between the FAU connector and the surface of the PIC die.

Example 11 includes the subject matter of Example 1, wherein the feature comprises a V shaped profile.

Example 12 includes the subject matter of Example 1, wherein the FAU connector includes a vertical coupler, and the FAU is vertically optically coupled with the array coupler interface.

Example 13 includes the subject matter of Example 1, wherein the FAU connector includes an edge coupler, and the FAU is in optical alignment with the array coupler interface via edge coupling.

Example 14 includes the subject matter of Example 1, wherein the sliding joint is a first sliding joint, and wherein: the FAU connector comprises: a coupling component comprising a collimation lens and a first angled surface; and a focusing component comprising an isolator, a focusing lens, and a second angled surface; wherein the focusing component is optically coupled via beam collimation to the coupling component, via a second sliding joint; and wherein the second sliding joint is defined by another feature extending from the focusing component into another V-groove in the coupling component.

Example 15 includes the subject matter of Example 14, wherein the focusing component has a portion thereof that plugs into a cavity in the coupling component.

Example 16 is a package assembly, comprising: a package substrate having at least one integrated circuit (IC) component attached thereto; a photonic integrated circuit (PIC) component attached to the package substrate and electrically coupled with the IC component, a photonic integrated circuit (PIC) component attached to the package substrate and electrically coupled with the IC component, the PIC component comprising a surface having therein an array coupler interface located between two parallel channels, wherein individual channels are defined by two opposing sidewalls having an edge at the surface and sloping downward therefrom into the PIC component to meet along a longitudinal axis; a fiber array unit (FAU) connector comprising at least one optical fiber, the FAU connector optically coupled to the array coupler interface via a sliding joint; wherein the sliding joint is characterized by a feature extending from the FAU into a V-groove and contacting the two opposing sidewalls, and an adjustable gap between the FAU connector and a portion of the PIC die; and wherein an optical power in the at least one optical fiber is a function of a gap width.

Example 17 includes the subject matter of Example 16, wherein the FAU connector further includes a means for collimating light that is optically coupled to a means for focusing light.

Example 18 includes the subject matter of Example 17, wherein the sliding joint is a first sliding joint, the V-groove is a first V-groove, and the feature is a first feature, and wherein: wherein the means for focusing light is optically coupled to the means for collimating light via a second sliding joint defined by a second feature extended in a second V-groove; and wherein the FAU connector is optically coupled with the array coupler interface via vertical coupling and beam collimation.

Example 19 includes the subject matter of Example 17, wherein the means for focusing light plugs into a cavity in the means for collimating light.

Example 20 is a method, comprising: creating a V-groove on a surface of a photonic integrated circuit (PIC) die; marking the surface with a fiducial marker; creating a feature on a glass substrate fiber array unit (FAU) connector having a fiber optic array, the feature extending substantially perpendicular from the FAU, wherein the feature is configured to mate with the V-groove; using pick and place equipment to place the FAU connector on the PIC die to thereby create a sliding joint comprising the feature mated with the V-groove; powering the PIC die; and manipulating an adjustable gap associated with the sliding joint to increase an optical power in the fiber optic array.

Example 21 is a PIC die, comprising: an array coupler interface; a surface that defines a first v-groove located on a first side of the array coupler interface, and a second v-groove located on a second side of the array coupler interface; and wherein the first v-groove is substantially parallel to the second v-groove.

Example 22 is a fiber array unit (FAU) connector, comprising: a glass substrate comprising a lens, an isolator, and a fiber optic array comprising a plurality of optical fibers; and a feature extending substantially perpendicular from a surface of the glass substrate, wherein the feature is configured to mate with a V-groove in a surface of a photonic integrated circuit (PIC) die.

Example 23 includes the subject matter of Example 22, wherein the feature has a cross-sectional profile with substantially a V shape.

## Claims

1. An apparatus, comprising:
a photonic integrated circuit (PIC) die with an array coupler interface, wherein a surface of the PIC die defines two or more V -grooves, wherein the V-grooves comprise two opposing sidewalls; and
a fiber array unit (FAU) connector optically coupled to the array coupler interface via a sliding joint; and
wherein the sliding joint includes a feature extending from the FAU into a V-groove and contacting the two opposing sidewalls.

2. The apparatus of claim 1, wherein the FAU connector further includes a lens, an isolator, and at least one optical fiber.

3. The apparatus of claim 2, wherein the sliding joint includes a gap between the FAU connector and a portion of the PIC die, and an optical power in the at least one optical fiber is a function of a gap width.

4. The apparatus of claim 3, wherein the gap width has a range of about 0 microns to about 5 millimeters.

5. The apparatus of claim 1, further comprising at least one fiducial marker located on the surface.

6. The apparatus of claim 1 wherein the FAU connector comprises an overhang portion that overlays on a portion of the PIC die.

7. The apparatus of claim 6, wherein the overhang portion has a length in a range of about 100 microns to about 5 millimeters.

8. The apparatus of claim 6, wherein the overhang portion has a thickness of greater than or equal to about 100 microns.

9. The apparatus of claim 1, wherein the V-grooves have a depth of about 62.5 microns.

10. The apparatus of claim 1, further comprising an ultra-violet curable epoxy between the FAU connector and the surface of the PIC die.

11. The apparatus of claim 1, wherein the feature comprises a V shaped profile.

12. The apparatus of claim 1, wherein the FAU connector includes a vertical coupler, and the FAU is vertically optically coupled with the array coupler interface.

13. The apparatus of claim 1, wherein the FAU connector includes an edge coupler, and the FAU is in optical alignment with the array coupler interface via edge coupling.

14. The apparatus of claim 1, wherein the sliding joint is a first sliding joint, and wherein: the FAU connector comprises:
a coupling component comprising a collimation lens and a first angled surface; and
a focusing component comprising an isolator, a focusing lens, and a second angled surface;
wherein the focusing component is optically coupled via beam collimation to the coupling component, via a second sliding joint; and
wherein the second sliding joint is defined by another feature extending from the focusing component into another V-groove in the coupling component.

15. A method, comprising:
creating a channel on a surface of a photonic integrated circuit (PIC) die;
marking the surface with a fiducial marker;
creating a feature on a glass substrate fiber array unit (FAU) connector having a fiber optic array, the feature extending substantially perpendicular from the FAU, wherein the feature is configured to mate with the channel;
using pick and place equipment to place the FAU connector on the PIC die to thereby create a sliding joint comprising the feature mated with the channel;
powering the PIC die; and
manipulating a gap associated with the sliding joint to increase an optical power in the fiber optic array.
